# EUROPEAN PATENT SPECIFICATION

(11) **EP 2 816 916 B1**
(45) Date of publication and mention of the grant of the patent: **20.04.2016**
(21) Application number: 13713524.0
(22) Date of filing: 11.02.2013
(51) Int. Cl.: A41D 31/02, B32B 5/02, B32B 27/30, B32B 27/40, D06M 15/263, D06M 15/564

(54) **CARBON FIBER FABRIC AND PROCESS FOR ITS MANUFACTURE**
KOHLENFASERGEWEBE UND VERFAHREN ZU SEINER HERSTELLUNG
TISSU A BASE DE FIBRES DE CARBONE ET PROCEDE DE FABRICATION

(30) Priority: 20.02.2012 IT MI20120244
(43) Date of publication of application: 31.12.2014
(73) Proprietor: Automobili Lamborghini S.P.A., 40019 Sant'Agata Bolognese (IT)
(72) Inventor: MASINI, Attilio, I-40050 Monteveglio BO (IT)
(74) Representative: Pizzoli, Antonio
(86) International application number: PCT/IB2013/051112
(87) International publication number: WO 2013/124759

(56) References cited:
- JP-A- 2003 245 991
- JP-A- 2007 169 867
- JP-A- 2011 162 897
- US-A1- 2008 023 010

## Description

The present invention relates to a fabric made of carbon fiber, in particular a flexible fabric that can be used for products of clothing or leather goods. The present invention also relates to a process for the manufacture of such fabric, as well as a product of clothing or leather goods comprising this fabric.

Known carbon fiber fabrics comprise a web of thin filaments of carbon fibers arranged perpendicularly to each other. These known fabrics are impregnated with polymeric resins and overlapped according to suitable directions. The resins are cured to obtain rigid materials with a high specific resistance, which are suitable for the production of structural parts or aesthetic parts. These materials, because of their characteristic stiffness, cannot be applied for example to the clothing industry, where flexible fabrics that can be sewn and folded are required. This also excludes the use of raw fabrics made of carbon fiber, which tend to unthread and are not able to keep unchanged the arrangement of the fibers once deformed.

JP-A-2003245991 and US-A-2008023010 disclose garments comprising a carbon fiber fabric laminated with a polymeric layer, in particular polyurethane.

JP-A-20011162897 discloses a carbon fiber fabric for bags or garments, which is impregnated with an acrylic or polyurethane resin.

The object of the present invention is therefore to provide a fabric made of carbon fiber free from said drawbacks. Said object is achieved with a fabric, a process and a product, whose main features are specified in claims 1, 2 and 12, while other features are specified in the remaining claims.

Thanks to its particular features, the fabric according to the present invention can be advantageously used for products and accessories of clothing or leather goods, in particular bags, as well as for other applications requiring a flexible fabric, such as for example coatings of seating and interior walls, in particular of motor vehicles. In fact, the fabric according to the present invention does not fray even when the fibers are stressed by the seams. Furthermore, even if deformed, the fabric maintains a substantially perpendicular arrangement and a limited longitudinal sliding of the fibers, so as to avoid permanent deformations of its structure.

A particular protective layer is preferably applied to the fabric to improve the handling during the manufacture and/or to limit the flexibility of the fabric, as well as to make it resistant, waterproof, insulating, semi-transparent, non-transparent and/or opaque.

The fabric according to the present invention is pleasant to the touch and has a high resistance, superior to that of a raw fabric of carbon fiber, while retaining an extreme flexibility which allows also to create folds or hems on the same fabric without compromising the integrity. The fabric is also very elastic since the particular layers applied to it ensure a correct arrangement of the texture even after deformations. It is therefore possible to deform this fabric without compromising its texture and without causing unthreadings between the fibers.

According to an aspect of the invention, the particular polyurethane or acrylic film adheres only to the most superficial fibers of the fabric of carbon fiber, while the filaments in the most inner layers of the fabric remain free to slide between them, so as to obtain a fabric resistant to surface wear, but still extremely flexible.

At least one edge of the fabric in its final configuration is preferably folded and sewn on itself, so as to form a hem that prevents unthreading of the fibers of the most inner layers of the fabric.

Further advantages and characteristics of the fabric and of the process according to the present invention will become apparent to those skilled in the art from the following detailed and non-limiting description of an embodiment thereof with reference to the accompanying drawings in which:
- Figure 1 shows a partial section of the fabric during a step of the process; and
- Figure 2 shows the fabric of Figure 1 during a subsequent step of the process.

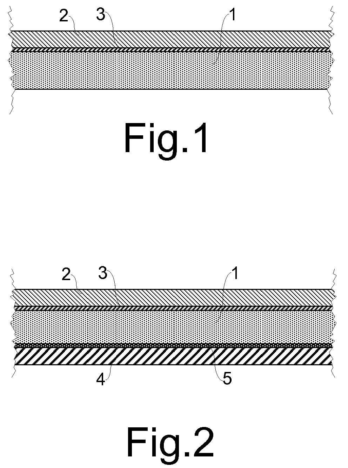

Referring to Figure 1, it is seen that fabric 1 according to the present invention comprises at least a weave, in particular cloth, twill or satin weave, of yams of carbon fiber having a linear density between 50 and 5000 g/km and comprising from 1000 to 60000 filaments, in particular from 3000 to 24000 filaments having a diameter comprised between 5 and 10 microns. The thickness of fabric 1 is comprised between 50 and 1000 microns.

In a first preliminary operating step, to ensure the regularity and a good aesthetic finish of the weave, fabric 1 is brushed and/or ironed at a temperature comprised between 30° and 200° and/or at a pressure comprised between 10 and 200 bar by means of two cylinders or two plates suitable to exert a variable pressure.

In a second preliminary operating step, at least one protective layer 2, in particular comprising a film or a nonwoven fabric made of polyester, polyamide or glass fiber, is applied onto one side of fabric 1 by means of at least one adhesive layer 3, in particular based on polyurethane, acrylic or silicone, applied to fabric 1. The thickness of the protective layer 2 is comprised between 50 and 500 microns. During the application of the protective layer 2 to fabric 1 the adhesive layer 3 is heated to a temperature comprised between 50° and 250°, so as to melt the adhesive layer 3 without changing the features of the protective layer 2.

Referring to Figure 2, it is seen that in a main operating step a polyurethane or acrylic film 4, preferably transparent or semi-transparent, is applied onto the opposite side of fabric 1 with respect to the protective layer 2, namely fabric 1 is comprised between the protective layer 2 and the polyurethane or acrylic film 4. The polyurethane or acrylic film 4 has a thickness comprised between 50 and 500 microns and is applied to fabric 1 by means of a lamination, in particular a hot calendering or pressing, in which fabric 1 and the polyurethane or acrylic film 4 are laminated together at a temperature comprised between 30° and 200° and/or at a pressure comprised between 10 and 200 bar. During this operating step the surface of the polyurethane or acrylic film 4 in contact with fabric 1 partially penetrates fabric 1, so as to create an intermediate layer 5, having a thickness comprised between 5% and 60% of the thickness of fabric 1, wherein the outer filaments of fabric 1 are integral with the polyurethane or acrylic film 4.

In an alternative embodiment, the polyurethane or acrylic film 4 can be applied to fabric 1 in the described above manner before applying the protective layer 2.

In a final operating step, at least one edge of fabric 1 joined to the polyurethane or acrylic film 4 and to the protective layer 2, if any, is folded and sewn on itself so as to form a hem.

Possible variants and/or additions may be made by those skilled in the art to the embodiment of the invention here described and illustrated remaining within the scope of the following claims. In particular, further embodiments of the invention may include the technical features of one of the following claims, with the addition of one or more technical features, taken individually or in any mutual combination, described in the text and/or illustrated in the drawings.

## Claims

1. Carbon fiber fabric, **characterized in that** a polyurethane or acrylic film (4) is laminated to at least one side of this fabric (1) and partially penetrates the fabric (1), so as to create an intermediate layer (5) in which the outer filaments of the fabric (1) are integral with the polyurethane or acrylic film (4).

2. Process for manufacturing carbon fiber fabrics, **characterized in that** a polyurethane or acrylic film (4) is applied to one side of a carbon fiber fabric (1) by means of lamination, in particular a hot calendering or pressing, in which the surface of the polyurethane or acrylic film (4) contacting the fabric (1) partially penetrates the fabric (1) to create an intermediate layer (5) in which the outer filaments of the fabric (1) are integral with the polyurethane or acrylic film (4).

3. Process according to the previous claim, **characterized in that** said lamination is carried out at a temperature comprised between 30° and 200° and/or at a pressure comprised between 10 and 200 bar.

4. Fabric according to claim 1 or process according to claim 2 or 3, **characterized in that** the fabric (1) comprises at least a weave, in particular cloth, twill or satin weave, of yarns of carbon fiber having a linear density between 50 and 5000 g/km and comprising from 1000 to 60000 filaments, in particular from 3000 to 24000 filaments having a diameter comprised between 5 and 10 microns.

5. Fabric according to claim 1 or 4 or process according to one of claims 2 to 4, **characterized in that** the side of the fabric (1) opposite to the polyurethane or acrylic film (4) is joined to a protective layer (2), so that the fabric (1) is comprised between the protective layer (2) and the polyurethane or acrylic film (4).

6. Process according to the previous claim, **characterized in that** the protective layer (2) is applied to the fabric (1) before applying the polyurethane or acrylic film (4) to the fabric (1).

7. Fabric according to claim 5 or process according to claim 5 or 6, **characterized in that** the protective layer (2) comprises a film or a nonwoven fabric and is made of polyester, polyamide or fiberglass.

8. Fabric according to claim 5 or 7 or process according to one of claims 5 to 7, **characterized in that** the protective layer (2) is applied to a side of the fabric (1) by means of at least one adhesive layer (3).

9. Fabric according to claim 1, 4, 5, 7 or 8 or process according to one of claims 2 to 8, **characterized in that** at least one edge of the fabric (1) joined to the polyurethane or acrylic film (4) and to the protective layer (2), if any, is folded and sewn on itself so as to form a hem.

10. Fabric according to claim 1, 4, 5, 7, 8 or 9 or process according to one of claims 2 to 9, **characterized in that** the thickness of the intermediate layer (5) is comprised between 5% and 60% of the thickness of the fabric (1).

11. Fabric according to claim 1, 4, 5, 7, 8, 9 or 10 or process according to one of claims 2 to 10, **characterized in that** the polyurethane or acrylic film (4) is transparent or semitransparent.

12. Clothing or leather goods product, in particular a bag, **characterized in that** it comprises a fabric according to one of claims 1, 4, 5, 7, 8, 9, 10 or 11.

## Patentansprüche

1. Kohlenstofffasergewebe, **dadurch gekennzeichnet, dass** ein Polyurethanoder Acryl-Film (4) an wenigstens einer Seite dieses Gewebes (1) auflaminiert ist und das Gewebe (1) partiell durchdringt, um eine Zwischenschicht (5) zu erschaffen, in welcher die äußeren Fasern des Gewebes (1) mit dem Polyurethan- oder Acryl-Film (4) integral ausgebildet sind.

2. Verfahren zur Herstellung von Kohlenstofffasergeweben, **dadurch gekennzeichnet, dass** ein Polyurethan- oder Acryl-Film (4) durch Laminieren auf einer Seite des Kohlenstofffasergewebes (1) appliziert wird, insbesondere durch Heiß-Kalandrieren oder Pressen, wobei die mit dem Gewebe (1) in Kontakt stehende Oberfläche des Polyurethan- oder Acryl-Films (4) das Gewebe (1) partiell durchdringt, um eine Zwischenschicht (5) zu erschaffen, in welcher die äußeren Fasern des Gewebes (1) mit dem Polyurethan- oder Acryl-Film (4) integral ausgebildet sind.

3. Verfahren nach dem vorherigen Anspruch, **dadurch gekennzeichnet, dass** das besagte Laminieren bei einer Temperatur zwischen 30° und 200° ausgeführt wird, und/oder bei einem Druck zwischen 10 und 200 Bar.

4. Gewebe nach Anspruch 1 oder Verfahren nach Anspruch 2 oder 3, **dadurch gekennzeichnet, dass** das Gewebe (1) wenigstens eine Bindung aufweist, insbesondere eine Leinwand-, Körper- oder Atlasbindung, von Kohlenstofffasergarnen mit einer linearen Dichte zwischen 50 und 5000 g/km und mit 1000 bis 60000 Filamenten, insbesondere von 3000 bis 24000 Filamenten, mit einem Durchmesser zwischen 5 und 10 Mikron.

5. Gewebe nach Anspruch 1 oder 4 oder Verfahren nach einem der Ansprüche 2 bis 4, **dadurch gekennzeichnet, dass** die dem Polyurethan- oder Acryl-Film (4) abgewandte Seite des Gewebes (1) mit einer Schutzschicht (2) verbunden ist, so dass das Gewebe (1) zwischen der Schutzschicht (2) und dem Polyurethan- oder Acryl-Film (4) eingeschlossen ist.

6. Verfahren nach dem vorherigen Anspruch, **dadurch gekennzeichnet, dass** die Schutzschicht (2) auf das Gewebe (1) appliziert wird, bevor der Polyurethan- oder Acryl-Film (4) auf das Gewebe (1) appliziert wird.

7. Gewebe nach Anspruch 5 oder Verfahren nach Anspruch 5 oder 6, **dadurch gekennzeichnet, dass** die Schutzschicht (2) aus einem Film oder einem Vlies besteht und aus Polyester, Polyamid oder Glasfaser hergestellt ist.

8. Gewebe nach Anspruch 5 oder 7 oder Verfahren nach einem der Ansprüche 5 bis 7, **dadurch gekennzeichnet, dass** die Schutzschicht (2) mittels wenigstens einer Klebeschicht (3) auf eine Seite des Gewebes (1) appliziert ist.

9. Gewebe nach Anspruch 1, 4, 5, 7 oder 8 oder Verfahren nach einem der Ansprüche 2 bis 8, **dadurch gekennzeichnet, dass** wenigstens eine Kante des mit dem Polyurethan- oder Acryl-Film (4) und, falls vorhanden, mit der Schutzschicht (2) verbundenen Gewebes (1) umgefaltet und mit sich selbst vernäht ist, um einen Saum zu bilden.

10. Gewebe nach Anspruch 1, 4, 5, 7, 8 oder 9 oder Verfahren nach einem der Ansprüche 2 bis 9, **dadurch gekennzeichnet, dass** die Dicke der Zwischenschicht (5) zwischen 5 % und 60 % der Dicke des Gewebes (1) liegt.

11. Gewebe nach Anspruch 1, 4, 5, 7, 8, 9 oder 10 oder Verfahren nach einem der Ansprüche 2 bis 10, **dadurch gekennzeichnet, dass** der Polyurethan- oder Acryl-Film (4) transparent oder halbtransparent ist.

12. Kleidung oder Lederwarenprodukt, insbesondere eine Tasche, **dadurch gekennzeichnet, dass** sie ein Gewebe nach einem der Ansprüche 1, 4, 5, 7, 8, 9, 10 oder 11 umfasst.

## Revendications

1. Tissu à base de fibres de carbone, **caractérisé en ce qu'**un film de polyuréthane ou d'acrylique (4) est déposé en couche sur au moins un côté de ce tissu (1) et pénètre partiellement dans le tissu (1), afin de créer une couche intermédiaire (5) dans laquelle les filaments externes du tissu (1) sont solidaires avec le film de polyuréthane ou d'acrylique (4).

2. Procédé pour fabriquer des tissus à base de fibres de carbone, **caractérisé en ce qu'**un film de polyuréthane ou d'acrylique (4) est appliqué sur un côté d'un tissu à base de fibres de carbone (1) au moyen du dépôt en couche, en particulier un calandrage ou pressage à chaud, dans lequel la surface du film de polyuréthane ou d'acrylique (4) en contact avec le tissu (1) pénètre partiellement dans le tissu (1) afin de créer une couche intermédiaire (5) dans laquelle les filaments externes du tissu (1) sont solidaires avec le film de polyuréthane ou d'acrylique (4).

3. Procédé selon la revendication précédente, **caractérisé en ce que** ledit dépôt en couche est réalisé à une température comprise entre 30° et 200° et/ou à une pression comprise entre 10 et 200 bar.

4. Tissu selon la revendication 1 ou procédé selon la revendication 2 ou 3, **caractérisé en ce que** le tissu (1) comprend au moins un tissage, en particulier une armure textile, une armure sergé ou une armure satin, de fils de fibre de carbone ayant une densité linéaire comprise entre 50 et 5 000 g/km et comprenant de 1 000 à 60 000 filaments, en particulier de 3 000 à 24 000 filaments ayant un diamètre compris entre 5 et 10 microns.

5. Tissu selon la revendication 1 ou 4 ou procédé selon l'une des revendications 2 à 4, **caractérisé en ce que** le côté du tissu (1) opposé au film de polyuréthane ou d'acrylique (4) est assemblé à une couche de protection (2), de sorte que le tissu (1) est compris entre la couche de protection (2) et le film de polyuréthane ou d'acrylique (4).

6. Procédé selon la revendication précédente, **caractérisé en ce que** la couche de protection (2) est appliquée sur le tissu (1) avant d'appliquer le film de polyuréthane ou d'acrylique (4) sur le tissu (1).

7. Tissu selon la revendication 5 ou procédé selon la revendication 5 ou 6, **caractérisé en ce que** la couche de protection (2) comprend un film ou un tissu non tissé et est réalisée à partir de polyester, de polyamide ou de fibres de verre.

8. Tissu selon la revendication 5 ou 7 ou procédé selon l'une des revendications 5 à 7, **caractérisé en ce que** le couche de protection (2) est appliquée sur un côté du tissu (1) au moyen d'au moins une couche adhésive (3).

9. Tissu selon la revendication 1, 4, 5, 7 ou 8 ou procédé selon l'une des revendications 2 à 8, **caractérisé en ce qu'**au moins un bord du tissu (1) assemblé au film de polyuréthane ou d'acrylique (4) et à la couche de protection (2), si elle existe, est plié et cousu sur lui-même afin de former un ourlet.

10. Tissu selon la revendication 1, 4, 5, 7, 8 ou 9 ou procédé selon l'une des revendications 2 à 9, **caractérisé en ce que** l'épaisseur de la couche intermédiaire (5) est comprise entre 5 % et 60 % de l'épaisseur du tissu (1).

11. Tissu selon la revendication 1, 4, 5, 7, 8, 9 ou 10 ou procédé selon l'une des revendications 2 à 10, **caractérisé en ce que** le film de polyuréthane ou d'acrylique (4) est transparent ou semi-transparent.

12. Vêtement ou article de maroquinerie, en particulier un sac, **caractérisé en ce qu'**il comprend un tissu selon l'une des revendications 1, 4, 5, 7, 8, 9, 10 ou 11.
